Europäisches Patentamt

European Patent Office

Office européen des brevets

(19)

(11)  **EP 1 589 437 A2**

(12)  **EUROPÄISCHE PATENTANMELDUNG**

(43) Veröffentlichungstag:
     **26.10.2005  Patentblatt 2005/43**

(51) Int Cl.⁷: **G06F 13/40**

(21) Anmeldenummer: **05004913.9**

(22) Anmeldetag: **07.03.2005**

(84) Benannte Vertragsstaaten:
     **AT BE BG CH CY CZ DE DK EE ES FI FR GB GR
     HU IE IS IT LI LT LU MC NL PL PT RO SE SI SK TR**
     Benannte Erstreckungsstaaten:
     **AL BA HR LV MK YU**

(30) Priorität: **23.04.2004  DE 102004019781**

(71) Anmelder: **ROBERT BOSCH GMBH
     70442 Stuttgart (DE)**

(72) Erfinder: **Mueller, Andreas
     71665 Vaihingen/Enz (DE)**

(54)  **Elektronische Schnittstellenschaltung und Bussystem mit der Schnittstellenschaltung**

(57)    Die Erfindung betrifft eine elektronische Schnittstellenschaltung (200), insbesondere in einem Bussystem für Kraftfahrzeuge. Sie dient zum Ankoppeln einer Busteilnehmervorrichtung (300) an eine Daten-busleitung (100). Zur Vermeidung von unerwünschten Ruheströmen wird erfindungsgemäß vorgeschlagen, innerhalb der Schnittstellenschaltung einen Pull-down-Widerstand ($R_{PD}$) zwischen der Datenbusleitung (100) und Massepotential vorzusehen.

Fig. 1

EP 1 589 437 A2

**Beschreibung**

Die Erfindung betrifft eine elektronische Schnittstellenschaltung, insbesondere in einem Bussystem für Kraftfahrzeuge. Darüber hinaus betrifft die Erfindung das Bussystem selber.

Stand der Technik

Im Stand der Technik sind eine Vielzahl von unterschiedlichen seriellen Bussystemen für Anwendungen in einem Kraftfahrzeug bekannt. Typische Bussysteme sind beispielsweise der sogenannte CAN-Bus, der LIN-Bus und andere. Allen diesen Bussystemen gemeinsam ist das Vorhandensein ein oder mehrerer Pull-up-Widerstände, über welche die Datenbusleitungen der Bussysteme an deren Versorgungsspannung angekoppelt werden. Mit einem Schalter sind die Datenleitungen in diesen Bussystemen typischerweise nach Masse geschaltet. Parallel zu der Reihenschaltung von Pull-up-Widerstand und Schalter sind typischerweise auch reine Spannungsteiler zwischen die Versorgungsspannung und Masse geschaltet, welche beispielsweise zur Generierung einer Referenzspannung zur Detektion eines High- oder Low-Pegels auf der Datenleitung dienen.

In den erwähnten Bussystemen liegen nicht immer alle Busteilnehmer zum Beispiel an Klemme 15 (Zündung abgeschaltet), was zur Folge hat, dass diese Busteilnehmer selbst bei abgeschalteter Zündung nicht von der Versorgungsspannung getrennt sind. Die beschriebene typische Schaltungskonfiguration führt bei diesen Busteilnehmern dazu, dass selbst bei abgestelltem Fahrzeug, d.h. bei abgeschalteter Zündung, ein unerwünschter Ruhestrom fließt. Weiterhin kann ein Ruhestrom aufgrund eines fehlerhaften Kurzschlusses nach Masse entstehen, der zum Liegenbleiben des Fahrzeugs führt. Abschaltvorrichtungen, welche das Fließen eines Ruhestromes verhindern, sind nur sehr aufwändig realisierbar.

Ausgehend von diesem Stand der Technik ist es deshalb die Aufgabe der Erfindung, eine elektronische Schnittstellenschaltung zum Ankoppeln einer Busteilnehmervorrichtung an eine Datenbusleitung so zu gestalten, dass das Fließen eines Ruhestromes, insbesondere bei einem Fahrzeug mit abgeschalteter Zündung, wirksam verhindert wird.

Vorteile der Erfindung

Die Verwendung des beanspruchten Pull-down-Widerstandes anstelle der im Stand der Technik üblichen Pull-up-Widerstände bewirkt vorteilhafterweise, dass der Ruhepegel der Datenbusleitung zumindest in die Nähe von Massepotential, typischerweise auf das Potential des Minuspols der Fahrzeugbatterie, gelegt wird. Auf diese Weise wird sichergestellt, dass insbesondere bei abgeschalteter Zündung in dem Busteilnehmer kein Ruhestrom fließt. Außerdem wird die Batterie eines Kraftfahrzeugs, in welches das Bussystem mit der Schnittstellenschaltung eingebaut ist, im Falle eines Kurzschlusses nach Masse nicht entladen.

Vorteilhafterweise kann die beschriebene Schnittstellenschaltung sehr preisgünstig mit billigen Standardbauelementen realisiert werden. Selbstverständlich kann sie auch in einen Schaltkreis, zum Beispiel einen Application Specific Integrated Circuit ASIC, integriert werden.

Gemäß einer vorteilhaften Ausgestaltung weist die erfindungsgemäße Schnittstellenschaltung eine Sendeeinrichtung auf, welche ausgebildet ist, den Pegel eines Sendesignals auf der Datenbusleitung unabhängig von der Versorgungsspannung zu generieren. Dies bietet zum einen den Vorteil, dass die erfindungsgemäße Schnittstellenschaltung in Kraftfahrzeugen mit unterschiedlichen Bordnetzspannungen beispielsweise mit einer Bordnetzspannung zwischen 12 Volt und 42 Volt sowie in Mehrspannungsbordnetzen eingesetzt werden kann. Dies vereinfacht die Kommunikation zwischen unterschiedlich versorgten Busteilnehmern innerhalb der verschiedenen Bussysteme. Weiterhin ermöglicht diese spezifische Ausbildung der Sendeeinrichtung die Generierung eines aktiven Pegels auf der Datenbusleitung, der unabhängig von dem Pegel der Versorgungsspannung ist. Beispielsweise kann der Pegel in die Nähe der niedrigsten zulässigen Betriebsspannung für eine jeweils verwendete Busteilnehmervorrichtung gelegt werden. Auf diese Weise ist es beispielsweise möglich, dass eine 12-Volt-Busteilnehmervorrichtung (Steuergerät) problemlos mit einer 42-Volt-Busteilnehmervorrichtung bei Sendebetrieb kommuniziert. Wegen seiner Unabhängigkeit von der Versorgungsspannung wird der Pegel auf der Datenbusleitung insbesondere bei Sendebetrieb nachfolgend auch als absoluter Pegel bezeichnet.

Der absolute Pegel lässt sich vorteilhafterweise aus einer bereits vorhandenen absoluten Spannung, wie zum Beispiel der Versorgungsspannung oder der Ausgangsspannung am Sendeausgang der Busteilnehmervorrichtung ableiten; eine separate aktive Referenzspannungsquelle kann deshalb entfallen.

Vorteilhafterweise ist der Ausgang der Sendeeinrichtung innerhalb der Schnittstellenschaltung hochohmig ausgebildet. Auf diese Weise wird verhindert, dass ein Datensignal beziehungsweise ein Strom von der Datenbusleitung durch die Sendeeinrichtung fließt und dort insbesondere ohmsche Verluste erzeugt.

Sowohl die Sendeeinrichtung wie auch eine Empfangseinrichtung der Schnittstellenschaltung verhalten sich wie eine logisch invertierende serielle Standardschnittstelle. Dies hat den Vorteil, dass alle Busteilnehmervorrichtungen mit einer derartig standardisierten Schnittstelle zusammen mit der beanspruchten Schnittstellenschaltung eingesetzt werden können. Außerdem können bisherige Protokolle verwendet werden.

Die Empfangseinrichtung innerhalb der beanspruchten Schnittstellenschaltung ist vorzugsweise so ausgebildet, dass in ihr ein Schwellenwert zum Erkennen von logisch eins und null bei etwa der Hälfte des jeweils definierten und verwendeten absoluten Pegels auf der Datenbusleitung liegt.

Eine Tiefpasseinrichtung am Eingang der Schnittstellenschaltung zum Tiefpassfiltern eines über die Datenbusleitung empfangenen Empfangssignals bewirkt ein gutes elektromagnetisches Verträglichkeits-EMV-Verhalten, das heißt insbesondere eine Reduzierung der Störeinflüsse durch eine Antennenwirkung der Busleitung.

Eine Aufweckschaltung der Schnittstellenschaltung dient vorteilhafterweise ebenfalls zur Reduzierung des Ruhestroms der Busteilnehmer.

In einem Bussystem, bei dem eine Mehrzahl von Busteilnehmervorrichtungen an eine Datenbusleitung angeschlossen sind, ist es vorteilhaft, wenn jede dieser Busteilnehmervorrichtungen über eine gleichartige erfindungsgemäße Schnittstellenschaltung an die Datenbusleitung angeschlossen ist. Insbesondere sollte dann in jedem der Busteilnehmer der Pull-down-Widerstand gleich groß sein, unabhängig davon, ob der jeweilige Busteilnehmer als Master oder als Slave betrieben wird. Auch sollte in allen Busteilnehmern ein gleich großer Eingangskondensator nach Masse geschaltet sein. Neben einem guten EMV-Verhalten bewirken die gleich großen Pull-down-Widerstände und Eingangskondensatoren bei allen Busteilnehmern eine gleich große Zeitkonstante, egal wie viele Teilnehmer an die Datenbusleitung angeschlossen sind. Die Verlustleistung pro Pull-down-Widerstand bleibt dann auch in einem Kurzschlussfall gering.

Zeichnungen

Der Beschreibung sind insgesamt sieben Figuren beigefügt, wobei

Figur 1 ein erstes Ausführungsbeispiel für den schematischen Aufbau der erfindungsgemäßen Schnittstellenschaltung;

Figur 2 den detaillierten Aufbau einer Sendeeinrichtung innerhalb der Schnittstellenschaltung;

Figur 3 ein zweites Ausführungsbeispiel für den schematischen Aufbau der erfindungsgemäßen Schnittstellenschaltung;

Figur 4 ein Ausführungsbeispiel für den Aufbau einer erfindungsgemäßen Empfangseinrichtung innerhalb der Schnittstellenschaltung;

Figur 5 ein Ausführungsbeispiel für eine Tiefpasseinrichtung der Schnittstellenschaltung;

Figur 6 ein Ausführungsbeispiel für den Aufbau einer Aufweckschaltung der Schnittstellenschaltung; und

Figur 7 ein Bussystem mit mehreren erfindungsgemäßen Schnittstellen zur Ankopplung mehrerer Busteilnehmer an eine Datenbusleitung;

veranschaulicht.

Beschreibung der Ausführungsbeispiele

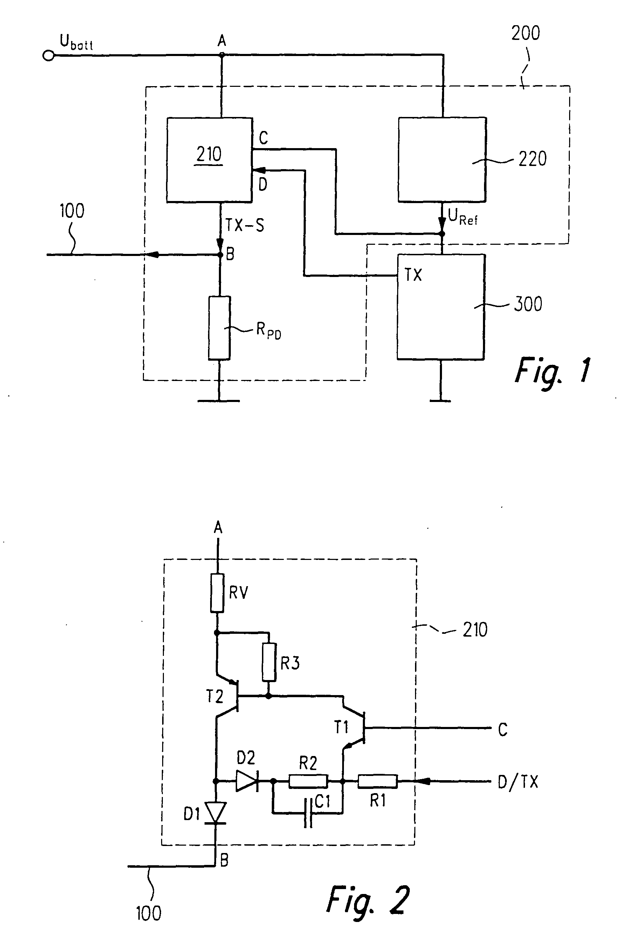

Figur 1 zeigt ein erstes Ausführungsbeispiel für den schematischen Aufbau einer erfindungsgemäßen Schnittstellenschaltung 200. Sie dient insbesondere in einem Bussystem für Kraftfahrzeuge zum Ankoppeln einer Busteilnehmervorrichtung 300 an eine Datenbusleitung 100. Die Schnittstellenschaltung 200 ist an eine Versorgungsspannung $U_{batt}$, typischerweise die Batteriespannung des Kraftfahrzeugs angeschlossen. Die Batteriespannung kann zum Beispiel 12 V, 24 V oder 42 V betragen.

Die Schnittstellenschaltung 200 umfasst eine Sendeeinrichtung 210, welche zwischen die Versorgungsspannung $U_{batt}$ und einen Pull-down-Widerstand $R_{PD}$ geschaltet ist. An den Knoten B zwischen dem Ausgang der Sendeeinrichtung 210 und dem Pull-down-Widerstand $R_{PD}$ ist die Datenbusleitung 100 angeschlossen. Die Sendeeinrichtung 210 dient zum Ausgeben von Sendedaten in Form eines digitalen Sendesignals TX-S mit einem High- und einem Low-Pegel auf die Datenbusleitung 100. Das Sendesignal repräsentiert Sendedaten, welche die Sendeeinrichtung 210 von einem Sendeausgang TX der Busteilnehmervorrichtung 300 empfängt. Die Sendeeinrichtung 210 ist zwar, wie bereits erwähnt, über den Knoten A an die Versorgungsspannung $U_{batt}$ angeschlossen, ist aber erfindungsgemäß ausgebildet, den High-Pegel $U_{High-Pgel}$ des Sendesignals TX-S unabhängig von der Versorgungsspannung $U_{batt}$ zu generieren. Vielmehr generiert die Sendeeinrichtung 210 den High-Pegel betraglich in etwa in doppelter Höhe einer von einer Referenzspannungsquelle 220 bereitgestellten Referenzspannung $U_{Ref}$. Die Referenzspannungsquelle ist vorzugsweise nicht als separate aktive Spannungsquelle ausgebildet, sondern leitet den Pegel der Referenzspannung $U_{Ref}$ vorzugsweise aus einer internen Referenz ab. Generell lässt sich das Verhalten der Sendeeinrichtung 210 bei der Generierung des High-Pegels $U_{High-Pegel}$ und des Low-Pegels $U_{Low-Pegel}$ des Sendesignals TX-S gemäß der folgenden physikalischen Formeln (1)(2) beschreiben:

$$U_{High-Pegel} = (U_{Ref} - U_{Low-Tx}) * V, \qquad (1)$$

$$U_{Low-Pegel} = (U_{Ref} - U_{high-Tx}) * V \approx 0[V] \qquad (2)$$

wobei

| | |
|---|---|
| $U_{Low-Pegel}$ : | den Low-Pegel des Sendesignals (TX-S)(logisch 1); |
| $U_{High-Pegel}$ : | den High-Pegel des Sendesignals (TX-S) (logisch 0); |
| $U_{Ref}$ : | eine Referenzspannung; |
| $U_{High-Tx}$ : | den High-Pegel (logisch 1) des Sendeausganges (TX) der Busteilnehmervorrichtung (300); |
| $U_{Low-TX}$ : | den Low-Pegel (logisch 0) des Sendeausganges (TX) der Busteilnehmervorrichtung (300); |
| V : | einen Verstärkungsfaktor; und |
| [V] : | die Einheit Volt |

repräsentiert.

Figur 2 zeigt den detaillierten Aufbau der erfindungsgemäßen Sendeeinrichtung 210. Sie umfasst einen npn-Transistor, nachfolgend als erster Transistor T1 bezeichnet. Dieser erste Transistor ist mit seiner Basis an die Referenzspannung $U_{Ref}$, mit seinem Kollektor an die Basis eines zweiten, als pnp-Transistor ausgebildeten Transistors T2 und mit seinem Emitter über einen ersten Widerstand R1 mit dem Sendeausgang TX der Busteilnehmervorrichtung 300 angeschlossen. Weiterhin ist der erste Transistor T1 mit seinem Emitter über eine Reihenschaltung an die Datenbusleitung 100 angeschlossen. Diese Reihenschaltung umfasst eine Parallelschaltung von einem zweiten Widerstand R2 und einem ersten Kondensator C1. Diese Parallelschaltung ist mit einem ihrer Enden an den Emitter des ersten Transistors und mit ihrem anderen Ende an die Kathode einer zweiten Diode D2 angeschlossen, welche ebenfalls Bestandteil der Reihenschaltung ist. Vorzugsweise umfasst die Reihenschaltung weiterhin eine erste Diode D1, welche mit ihrer Anode an die Anode der zweiten Diode D2 und mit ihrer Kathode an die Datenbusleitung 100 angeschlossen ist. Die erste Diode D1 macht den Ausgang der Sendeeinrichtung 210 hochohmig und verhindert so das Fließen eines Datensignals beziehungsweise eines Stromes von der Datenleitung 100 in die Sendeeinrichtung 210 hinein. Der zweite, als npn-Transistor ausgebildete Transistor T2, ist mit seinem Emitter über einen Vorwiderstand RV an die Versorgungsspannung $U_{batt}$ angeschlossen. Parallel zu der Emitter-Basis-Strecke des zweiten Transistors ist ein dritter Widerstand R3 geschaltet. Mit seinem Kollektor ist der zweite Transistor an die Anoden der ersten und zweiten Diode D1, D2 angeschlossen.

Die Sendeeinrichtung 210 funktioniert wie folgt: Die Sendeeinrichtung 210 dient, wie gesagt, zum Ausgeben von Sendedaten der Busteilnehmervorrichtung 300 auf die Datenbusleitung 100. Die Busteilnehmervorrichtung 300 legt ihren Sendeausgang TX im Ruhezustand, das heißt wenn kein Sendebetrieb stattfindet, auf das Niveau ihrer Versorgungsspannung, vorzugsweise der Referenzspannung $U_{Ref}$. Dieses Spannungsniveau entspricht dann einer logischen Eins. Sendedaten, wie ein Startbit oder logische Nullen zieht der Sendeausgang TX auf Massepotential. Das Signal am Sendeausgang TX der Busteilnehmervorrichtung 300 wird über den ersten Widerstand R1 in die Sendeeinrichtung 210 eingekoppelt. Über den ersten Widerstand wird der erste Transistor T1 an-, insbesondere aufgesteuert, der wiederum den zweiten Transistor T2 an-, insbesondere aufsteuert. Bei aufgesteuertem zweiten Transistor wird dann das Sendesignal TX-S, welches das Signal am Sendeausgang TX der Busteilnehmervorrichtung 300 in invertierter Form repräsentiert, über die erste Diode $D_1$ auf die Datenbusleitung 100 ausgegeben. Über die zweite Diode D2 und den zweiten Widerstand R2 wird eine Rückkopplung zwischen dem zweiten und dem ersten Transistor gebildet. Mit dieser Rückkopplung wird ein Regelkreis zwischen dem ersten und dem zweiten Transistor gebildet. Im Rahmen einer Regelung wird dann der erste Transistor so lange auf- und zugesteuert, bis sich an dem Emitter des ersten Transistors T1 und an dem Kollektor des zweiten Transistors T2 sowie auf der Datenbusleitung 100 ein gewünschter High-Pegel einstellt. Mit dem Verhältnis von erstem zu zweitem Widerstand R1/R2 wird die Verstärkung der Emitterspannung $UE_{T1}$ des ersten Transistors $UE_{T1} = U_{Ref}$ - UBE und damit der absolute Pegel auf der Datenbusleitung 100 eingestellt. UEB repräsentiert in der angegebenen Formel die Basisemitterspannung von T1. Der erste Kondensator C1 dient zur Verlangsamung der steigenden Flanke des Sendesignals TX-S und zur Verringerung von EMV-Abstrahlung.

Es sei an dieser Stelle nochmals betont, dass, obwohl die Sendeeinrichtung 210 über den Vorwiderstand RV an die Versorgungsspannung $U_{batt}$ angeschlossen ist, der High-Pegel des Sendesignals TX-S von der Sendeeinrichtung 210 völlig unabhängig von der Größe der Versorgungsspannung, nämlich vorzugsweise in etwa auf die Größe der doppelten Referenzspannung $U_{Ref}$ generiert und eingestellt wird. Der Vorwiderstand RV dient zur Begrenzung des Stromes durch den zweiten Transistor und zur Reduzierung von dessen Verlustleistung. Die Sendeeinrichtung 210 muss genau wie alle anderen Komponenten der Schnittstellenschaltung 200 an die Größe der von der zugeordneten Busteilnehmervorrichtung verwendeten Versorgungsspannung, also beispielsweise 12 V, 24 V oder 42 V angepasst sein.

Bei dem ersten Ausführungsbeispiel der erfindungsgemäßen Schnittstellenschaltung umfasst diese im Wesentlichen nur die Sendeeinrichtung 210 und war deshalb lediglich für einen Sendebetrieb ausgebildet. Wenn die Schnittstellenschaltung 200 dagegen auch für einen Empfangsbetrieb ausgebildet sein soll, dann muss sie weiterhin eine Empfangseinrichtung 230 zum Empfangen von Empfangsdaten in Form eines digitalen Empfangssignals RX-S von der Datenbusleitung 100 für die Busteilnehmervorrichtung 300 umfassen.

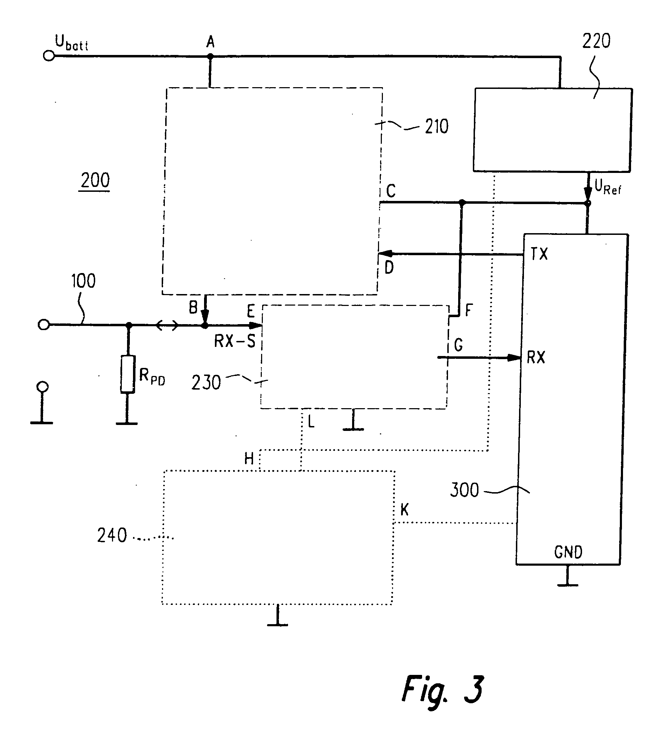

Wie in Figur 3 zu erkennen ist, ist die Empfangseinrichtung 230 zwischen die Referenzspannung $U_{Ref}$ und Masse geschaltet. Die Referenzspannung $U_{Ref}$ dient zur Versorgung der Bauelemente der Empfangseinrichtung 230. Die Empfangseinrichtung empfängt das Empfangssignal RX-S über die Datenbusleitung 100, invertiert dieses und gibt es über ihren Ausgang G auf den Empfangseingang RX der Busteilnehmervorrichtung 300 aus. Weiterhin kann die Schnittstellenschaltung 200 optional eine Aufweckeinrichtung 240 umfassen zum Aktivieren von insbesondere der Empfangseinrichtung 230 nach einer längeren Empfangspause.

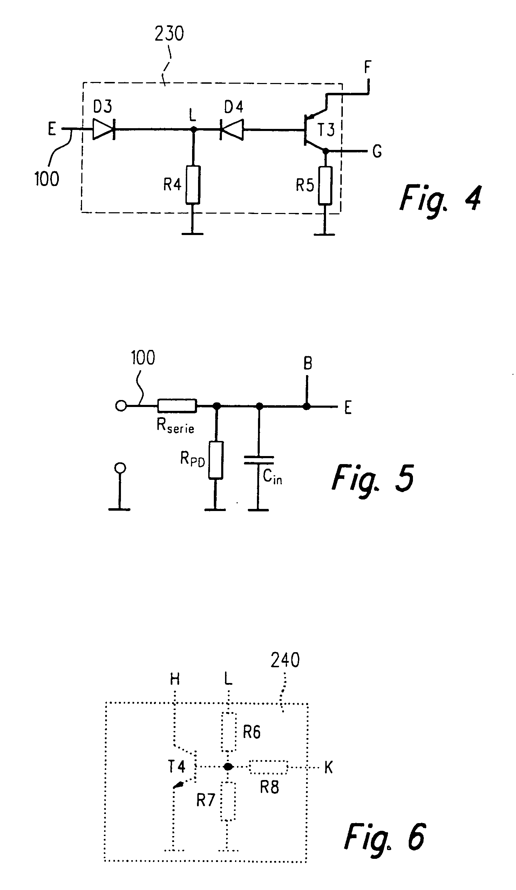

Der Aufbau der Empfangseinrichtung 230 wird nachfolgend unter Bezugnahme auf Figur 4 detailliert beschrieben.

Figur 4 zeigt, dass die Empfangseinrichtung 230 eine dritte Diode D3 aufweist, die mit ihrer Anode an die Datenbusleitung 100 angeschlossen ist und die mit ihrer Kathode über einen vierten Widerstand R4 nach Massepotential geschaltet ist. Gleichzeitig ist die Kathode der dritten Diode D3 an die Kathode einer vierten Diode D4 angeschlossen, deren Anode an die Basis eines dritten Transistors T3, ausgebildet als pnp-Transistor angeschlossen ist. Der Emitter F dieses dritten Transistors T3 ist an die Referenzspannung $U_{Ref}$ angeschlossen, während sein Kollektor G über einen fünften Widerstand R5 an Massepotential geschaltet ist. Weiterhin ist der Kollektor G des dritten Transistors T3 gleichzeitig mit dem Empfangseingang RX der Busteilnehmervorrichtung 300 verbunden.

Die Empfangseinrichtung 230 funktioniert wie folgt:

In einem Ruhezustand oder allgemein gesprochen, immer dann, wenn der Pegel des Empfangssignals RX-S unterhalb eines durch die Empfangseinrichtung 230 definierten Empfangsschwellenwertes liegt, besteht eine relativ große Potentialdifferenz zwischen der Referenzspannung $U_{Ref}$ und der Basis des dritten Transistors, so dass ein Basisstrom von dem dritten Transistor T3 über die vierte Diode D4 und den vierten Widerstand R4 nach Masse fließt. In diesem Fall liegt über dem fünften Widerstand R5 (Arbeitswiderstand) und damit an dem Empfangseingang RX des Busteilnehmers 300 im Wesentlichen die Referenzspannung $U_{Ref}$ an. Es findet also eine Invertierung beziehungsweise genauer gesagt eine Anpassung des Pegels des Eingangssignals RX-S an den Pegel des Empfangseingangs RX der Busteilnehmervorrichtung 300 statt. Dies gilt jedoch nicht nur für den soeben beschriebenen Ruhezustand, sondern auch dann, wenn an dem Eingang E, das heißt an der Anode der dritten Diode D3 ein positiver Spannungspegel des Empfangssignals RX-S von der Datenbusleitung 100 anliegt. Diese positive Spannung (High-Pegel) überträgt sich dann über die dritte Diode D3 zumindest im Wesentlichen auch auf den vierten Widerstand R4. Aufgrund dieses High-Pegels, das heißt genauer gesagt, wenn die Basisspannung des dritten Transistor den Empfangsschwellenwert in Form der Differenz von Referenzspannung $U_{Ref}$ minus der Basisspannung über dem dritten Transistor T3 übersteigt, dann fließt kein Basisstrom mehr in den dritten Transistor hinein. Der fünfte Widerstand R5 zieht dann den Empfangseingang RX der Busteilnehmervorrichtung 300 auf Masse und auf diese Weise wird der High-Pegel des Empfangssignals RX-S am RX-Eingang der Busteilnehmervorrichtung 300 in invertierter Form empfangen.

Figur 5 zeigt eine vorteilhafte Eingangsbeschaltung für die erfindungsgemäße Schnittstellenschaltung 200, insbesondere zur Ankoppelung der Datenbusleitung 100. Demnach ist es vorteilhaft, wenn neben dem Pull-down-Widerstand $R_{PD}$ ein Tiefpass, gebildet aus dem Widerstand $R_{serie}$, welcher in Reihe zu der Datenbusleitung 100 geschaltet ist, und einem parallel zu dem Pull-down-Widerstand geschalteten Kondensator $C_{in}$, vorgesehen ist. Der durch diese beiden Bauelemente realisierte Tiefpass erster Ordnung dient zur Verhinderung beziehungsweise zumindest zur Dämpfung von elektromagnetischer Einstrahlung und Electrostatic Discharge ESD durch die Datenleitung. Die Steilheit der Flanke von insbesondere dem Eingangssignal wird durch die Parallelschaltung des Pull-down-Widerstand $R_{PD}$ und des Kondensators $C_{in}$ definiert. Der Reihenwiderstand $R_{serie}$ muss einerseits so gewählt werden, dass er den von der Sendeeinrichtung 210 generierten aktiven Pegel des Sendesignals TX-S nicht allzu sehr reduziert, aber andererseits auch groß genug gewählt werden, um elektromagnetische Verträglichkeits-EMV-Anforderungen zu unterstützen.

Figur 6 zeigt schließlich eine Aufweckschaltung 240 zum Aktivieren von insbesondere der Empfangseinrichtung 230 aus einem Bereitschaftsmodus, sobald das Empfangssignal erkannt wird. Generell erkennt diese optional vorzusehende Aufweckschaltung eine Busaktivität anhand den auf der Datenbusleitung 100 vorhandenen positiven Signalpegeln und schaltet daraufhin die Versorgungsspannung $U_{Ref}$ der Busteilnehmervorrichtung 300 ein. Die Aufweckschaltung 240 ist grundsätzlich nur bei Anschluss an die Batterie, das heißt bei Klemme 30-Anwendungen, erforderlich; ein Abschalten der Versorgungsspannung durch die Aufweckschaltung 240 ist bei Versorgung von Klemme 15, das heißt Abschaltung über Zündung, ohnehin entbehrlich.

Die Aufweckschaltung 240 umfasst einen Spannungsteiler bestehend aus einem in Reihe geschalteten sechsten und siebten Widerstand R6, R7, wobei dieser Spannungsteiler zwischen den Knoten L in der Empfangseinrichtung 230 und Masse geschaltet ist. Bei Vorhandensein der Aufweckschaltung 240 und damit dieses besagten Spannungsteilers ist der Widerstand R4 in Figur 4 entbehrlich. Neben dem Spannungsteiler umfasst die Aufweckschaltung 240 einen npn-Transistor T4, dessen Basis mit der Mittelanzapfung des besagten Spannungsteilers verbunden ist. Der Emitter des vierten Transistors T4 ist nach Masse geschaltet, während der Kollektor des Transistors T4 die Referenzspannungsquelle 220 kontaktiert. Weiterhin ist zwischen die Basis des vierten Transistors T4 und einen sogenannten "Lifehold-Ausgang" der Busteilnehmervorrichtung, der als Hilfsspannungsquelle interpretiert werden kann, ein Vorwiderstand R8 geschaltet.

Die Aufweckschaltung 240 funktioniert wie folgt:

Wenn über die dritte Diode innerhalb der Empfangseinrichtung 230 der High-Pegel eines Empfangssignals RX-S an den Knoten L gelangt, wird auch die Basis des vierten Transistors T4 innerhalb der Aufweckschaltung 240 über den Spannungsteiler R6 und R7 positiv vorgespannt. Bei ausreichender Basis-Emitterspannung des vierten Transistors T4 wird dieser leitend und schaltet via eines Inhibit-Einganges die Referenzspannungsquelle 220, ausgebildet zum Beispiel in Form eines 5 Volt-Spannungsreglers, und damit die Versorgungsspannung für die Busteilnehmervorrichtung 300 $U_{Ref}$ ein.

Die Aufweckschwelle, das heißt eine Schwellenspannung, oberhalb derer der vierte Transistor T4 leitend wird, ist aufgrund von dessen Basis-Emitterstrecke temperaturabhängig. Ein Datenverkehr auf der Datenbusleitung 100 kann jedoch trotzdem mit der beschriebenen Aufweckschaltung 240 mit ausreichender Zuverlässigkeit erkannt werden. Typischerweise können High-Pegel auf der Datenbusleitung 100 im Bereich von 2,7 V - 6,3 V erkannt werden. Über den Vorwiderstand R8 schaltet die Busteilnehmervorrichtung 300 ihre Spannungsversorgung kontinuierlich ein (Lifehold), damit sie auch während auftretender Kommunikationspausen, das heißt wenn kein Busverkehr stattfindet, versorgt bleibt. Bei erkanntem Bus-Timeout schaltet die Busteilnehmervorrichtung 300 den Lifehold und damit seine Versorgungsspannung ab.

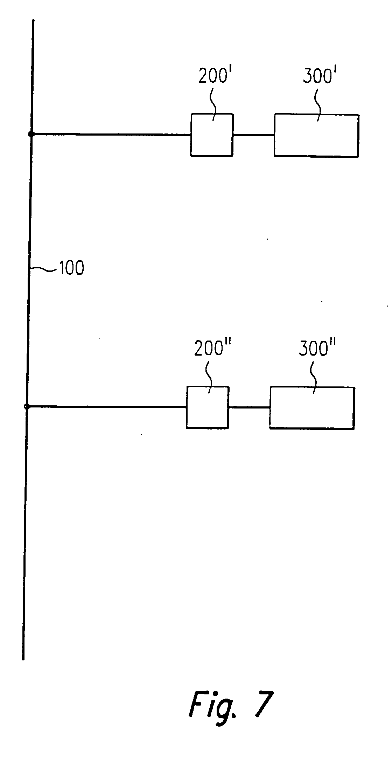

In Figur 7 ist ein Bussystem schematisch dargestellt, welches die Datenleitung 100 und mehrere Busteilnehmer 300, 300', 300" umfasst, die jeweils über individuelle Schnittstellenschaltungen 200', 200" an die Datenbusleitung 100 angekoppelt sind. Die Schnittstellenschaltungen 200', 200" sind vorteilhafterweise alle entsprechend der erfindungsgemäßen Schnittstellenschaltung 200 ausgebildet. Dem steht es jedoch nicht entgegen, dass diese Schnittstellenschaltungen individuell an eventuelle Besonderheiten ihrer zugeordneten Busteilnehmervorrichtungen angepasst sind. So ist es regelmäßig erforderlich, dass die Schnittstellenschaltungen für die jeweilige Versorgungsspannung der ihr zugeordneten Busteilnehmervorrichtung 300, 300', 300", zum Beispiel 12 V, 24 V oder 42 V, ausgelegt ist. Ein wesentlicher Vorteil der erfindungsgemäßen Schnittstellenschaltung besteht gerade darin, dass sie eine Ankopplung von Busteilnehmervorrichtungen 300 mit jeweils unterschiedlichen Spannungsversorgungen an ein und denselben Datenbus ermöglichen, indem sie insbesondere das Sendesignal unabhängig von der Größe der jeweiligen Versorgungsspannung generieren.

Bezüglich des Aufbaus der Tiefpasseinrichtung auf der Busseite der Schnittstellenschaltung ist es vorteilhaft, wenn sowohl alle Pull-down-Widerstände wie auch jeweils die Widerstände $R_{serie}$ und der Kondensator $C_{in}$ in allen Schnittstellenschaltung gleich groß dimensioniert sind, weil dann die Flankensteilheit der Signale auf der Datenbusleitung 100 unabhängig von der Anzahl der an die Datenbusleitung 100 angekoppelten Busteilnehmervorrichtungen ist.

### Patentansprüche

**1.** Elektronische Schnittstellenschaltung (200), insbesondere in einem Bussystem für Kraftfahrzeuge, zum Ankoppeln einer Busteilnehmervorrichtung (300) an eine Datenbusleitung (100);
**gekennzeichnet durch**
einen Pull-down-Widerstand ($R_{PD}$) zwischen der Datenbusleitung (100) und Massepotential.

**2.** Schnittstellenschaltung nach Anspruch 1, **gekennzeichnet durch** eine Sendeeinrichtung (210), welche zwischen eine Versorgungsspannung ($U_{batt}$) und den Pull-down-Widerstand ($R_{PD}$) angeschlossen ist, zum Ausgeben von von der Busteilnehmervorrichtung (300) empfangenen Sendedaten in Form eines digitalen Sendesignals (TX-S) mit einem High- und einem Low-Pegel auf die Datenbusleitung (100), wobei die Sendeeinrichtung (210) ausgebildet ist, den High-Pegel ($U_{High-Pegel}$) des Sendesignals (TX-S) unabhängig von der Versorgungsspannung ($U_{batt}$) zu generieren.

**3.** Schnittstellenschaltung (200) nach Anspruch 2, **dadurch gekennzeichnet, dass** die Sendeeinrichtung (210) ausgebildet ist, die Pegel auf der Datenbusleitung gemäß der folgenden Formeln zu generieren

$$U_{High-Pegel} = (U_{Ref} - U_{Low-TX}) \cdot V \qquad (1)$$

$$U_{Low-pegel} = (U_{Re\,f}\ U_{High-TX}) \cdot V \approx 0V \qquad (2)$$

wobei

$U_{Low-Pegel}$ :    den Low-Pegel des Sendesignals (TX-S)(logisch 1);

$U_{High-Pegel}$ : den High-Pegel des Sendesignals (TX-S) (logisch 0);

$U_{Ref}$ : eine Referenzspannung;

$U_{High-Tx}$ : den High-Pegel (logisch 1) des Sendeausganges (TX) der Busteilnehmervorrichtung (300);

$U_{Low-TX}$ : den Low-Pegel (logisch 0) des Sendeausganges (TX) der Busteilnehmervorrichtung (300);

V : einen Verstärkungsfaktor; und

[V] : die Einheit Volt

repräsentiert.

4. Schnittstellenschaltung (200) nach einem der vorangegangenen Ansprüche, **dadurch gekennzeichnet, dass** die Sendeeinrichtung (210) an ihrem Ausgang (B) hochohmig ausgebildet ist.

5. Schnittstellenschaltung (200) nach einem der vorangegangenen Ansprüche 2 - 4, **dadurch gekennzeichnet, dass** die Sendeeinrichtung (210) aufweist:

einen ersten als npn-Transistor ausgebildeten Transistor (T1) und einen zweiten als pnp-Transistor ausgebildeten Transistor (T2), einen ersten und einen zweiten Widerstand (R1, R2), einen Vorwiderstand (RV), eine erste und eine zweite Diode (D1, D2) sowie einen ersten Kondensator (C1);

wobei der erste Transistors (T1) mit seiner Basis an eine Referenzspannungsquelle (220), mit seinem Kollektor an die Basis des zweiten Transistors (T2) und mit seinem Emitter über den ersten Widerstand (R1) mit dem Sendeausgang (TX) des Busteilnehmers (300) und weiterhin mit seinem Emitter über eine Reihenschaltung an die Datenbusleitung (100) angeschlossen ist, wobei die Reihenschaltung eine an den Emitter angeschlossene Parallelschaltung bestehend aus dem zweiten Widerstand (R2) und dem ersten Kondensator (C1), die an das dem Emitter gegenüberliegende andere Ende der Parallelschaltung mit ihrer Kathode angeschlossene zweite Diode (D2) und vorzugsweise die mit ihrer Anode an die Anode der zweiten Diode (D2) und mit ihrer Kathode an die Datenbusleitung (100) angeschlossene erste Diode (D1) aufweist; wobei der zweite Transistor (T2) mit seinem Emitter über den Vorwiderstand (RV) an die Versorgungsspannung ($U_{batt}$) angeschlossen ist, parallel zu seiner Emitter-Basis-Strecke geschaltet den dritten Widerstand (R3) aufweist und mit seinem Kollektor an die Anoden der ersten und zweiten Diode (D1, D2) angeschlossen ist.

6. Schnittstellenschaltung (200) nach einem der vorangegangenen Ansprüche, **gekennzeichnet durch** eine Empfangseinrichtung (230) zum Empfangen von Empfangsdaten in Form eines digitalen Empfangssignals (RX-S) von der Datenbusleitung (100) für die Busteilnehmervorrichtung (300) und zum Anpassen von insbesondere dem High-Pegel/Low-Pegel des Empfangssignals (RX-S) an das High-Potential/Low-Potential des Empfangssignals (RX) der Busteilnehmervorrichtung (300).

7. Schnittstellenschaltung (200) nach Anspruch 6, **dadurch gekennzeichnet, dass** die Empfangseinrichtung (230) aufweist:

einen dritten Transistor (T3), vorzugsweise einen pnp-Transistor, eine dritte und vierte Diode (D3, D4) sowie einen vierten und fünften Widerstand (R4, R5);

wobei die dritte Diode (D3) mit ihrer Anode an die Datenbusleitung (100) angeschlossen ist; wobei die Kathode der dritten Diode (D3) zum einen über den vierten Widerstand (R4) nach Massepotential und zum anderen an die Kathode der vierten Diode (D4) geschaltet ist; wobei die Anode der vierten Diode (D4) an die Basis des dritten Transistors (3) angeschlossen ist; und wobei der dritte Transistor (T3) mit seinem Emitter (F) an eine Referenzspannungsquelle ($U_{Ref}$) und mit seinem Kollektor über den fünften Widerstand (R5) an Massepotential geschaltet ist, und wobei der Kollektor (G) gleichzeitig mit dem Empfangseingang (RX) der Busteilnehmervorrichtung (300) verbunden ist.

8. Schnittstellenschaltung (200) nach einem der Ansprüche 6 oder 7, **gekennzeichnet durch** eine Tiefpasseinrichtung ($R_{serie}$, $C_{in}$) zum Tiefpassfiltern des Empfangssignals (RX-S) auf der Datenbusleitung (100) bevor es in die Empfangseinrichtung (230) eintritt.

9. Schnittstellenschaltung (200) nach einem der Ansprüche 6 bis 8, **gekennzeichnet durch** eine Aufweckschaltung (240) zum Aktiveren von insbesondere der Empfangseinrichtung (230) aus einem Bereitschaftsmodus sobald das Empfangssignal auf der Datenbusleitung (100) erkannt wird.

10. Bussystem, insbesondere für ein Kraftfahrzeug, umfassend mindestens eine Datenbusleitung (100) und eine Mehrzahl von Busteilnehmervorrichtungen (300, 300', 300"), wobei die Busteilnehmervorrichtungen jeweils über eine Schnittstellenschaltung (200', 200") an die Datenbusleitung (100) angeschlossen sind;

**dadurch gekennzeichnet, dass**

die Schnittstellenschaltungen (200', 200") der einzelnen Busteilnehmervorrichtungen (300', 300") vorzugsweise alle nach einem der Ansprüche 1-8 ausgebildet sind.

*Fig. 1*

*Fig. 2*

*Fig. 3*

Fig. 4

Fig. 5

Fig. 6

Fig. 7